(19) Europäisches Patentamt / European Patent Office / Office européen des brevets

(11) **EP 3 254 126 B1**

(12) **EUROPEAN PATENT SPECIFICATION**

(45) Date of publication and mention
of the grant of the patent:
**13.11.2019 Bulletin 2019/46**

(21) Application number: **16746191.2**

(22) Date of filing: **29.01.2016**

(51) Int Cl.:
*H01J 49/00* (2006.01)    *G06K 9/62* (2006.01)
*G01N 30/72* (2006.01)

(86) International application number:
**PCT/IB2016/050480**

(87) International publication number:
**WO 2016/125059 (11.08.2016 Gazette 2016/32)**

(54) **INTERFERENCE DETECTION AND PEAK OF INTEREST DECONVOLUTION**

STÖRUNGSDETEKTION UND DEKONVOLUTION EINES BESTIMMTEN SPITZENWERTS

DÉTECTION D'INTERFÉRENCE ET DÉCONVOLUTION DE PIC D'INTÉRÊT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2015 US 201562112213 P**

(43) Date of publication of application:
**13.12.2017 Bulletin 2017/50**

(73) Proprietor: **DH Technologies Development PTE.
Ltd.
Singapore 739256 (SG)**

(72) Inventor: **IVOSEV, Gordana
Etobicoke, Ontario M9B 5Y3 (CA)**

(74) Representative: **J A Kemp LLP
14 South Square
Gray's Inn
London WC1R 5JJ (GB)**

(56) References cited:
**US-A- 5 481 476        US-A1- 2012 241 602
US-A1- 2013 035 867    US-A1- 2013 153 761
US-A1- 2014 095 084    US-A1- 2014 117 224
US-B2- 8 165 373**

**Description**

**INTRODUCTION**

It is of interest to extract pure compounds from the collections of their linear combinations also called mixtures. Quantification and identification of the components present in the mixture is a traditional problem in nuclear magnetic resonance (NMR), infrared (IR), ultraviolet (UV), electron paramagnetic resonance (EPR) and Raman spectroscopy, mass spectrometry, etc. Identification of the spectra of mixtures proceeds in the majority of the cases by matching the mixture's spectra with a library of reference compounds. This approach is largely ineffective, with the accuracy strongly dependent on the library's content of the pure component spectra. In addition, for a number of compounds isolated from natural sources or obtained in proteomics- and metabolomics-related studies, there is no library of pure components available yet.

In contrast to the previous library-based approach, it has been repeatedly demonstrated over the last ten years that it is possible to separate a mixture's spectra into pure component spectra employing a methodology known as blind source separation (BSS), blind extraction, or blind deconvolution that uses only the measurements of the mixture's spectra. Two methods in this domain are independent component analysis (ICA) and nonnegative matrix factorization (NMF). ICA belongs to a group of statistical methods for solving blind linear inverse problems. Assumptions upon which the ICA algorithms are built include assuming that unknown pure components are statistically independent and non-Gaussian, and assuming that the number of linearly independent mixtures is greater than or equal to the number of pure components. NMF belongs to a group of algebraic methods for solving linear inverse problems. It also requires that the number of linearly independent mixtures is greater than or equal to the number of pure components as well as that pure components are nonnegative and sparse. The nonnegativity requirement and sparseness requirement are not satisfied simultaneously in a majority of spectroscopic applications.

The background section of U.S. Patent No 8,165,373, for example, describes the current state of the art of blind deconvolution algorithms. Conventionally, these blind deconvolution algorithms are aimed at solving the general problem of identifying and quantitating compounds from mixtures that occurs in many areas of spectroscopy and mass spectrometry. Some areas of spectroscopy and mass spectrometry include more narrowly defined problems that can benefit from more narrowly tailored algorithms.

One non-limiting example of a more narrowly defined problem occurs in multiple reaction monitoring (MRM) mass spectrometry. MRM is a tandem mass spectrometry method. Both qualitative and quantitative information can be obtained from a tandem mass spectrometer. In such an instrument a precursor ion is selected in a mass filter, fragmented, and the product ions are analyzed in a mass analyzer. The entire process of selecting a precursor ion, fragmenting it, and analyzing the resulting product ions by mass-to-charge ratio (m/z) is referred to as mass spectrometry/mass spectrometry (MS/MS) or an MS/MS scan. The product ion spectrum produced from MS/MS can be used to identify a compound (the precursor ion) in a sample, and the intensity of one or more product ions can be used to quantitate the amount of the compound present in the sample.

Information dependent analysis (IDA) is a flexible tandem mass spectrometry method in which a user can specify criteria for performing MS/MS while a sample is being introduced into the tandem mass spectrometer. For example, in an IDA method a precursor ion or mass spectrometry (MS) survey scan is performed to generate a precursor ion peak list. The user can select criteria to filter the peak list for a subset of the precursor ions on the peak list. MS/MS is then performed on each precursor ion of the subset of precursor ions. A product ion spectrum is produced for each precursor. MS/MS is repeatedly performed on the precursor ions of the subset of precursor ions while the sample is being introduced into the tandem mass spectrometer. The sample is introduced through an injection or chromatographic run, for example.

Generally, two types of MS/MS are performed during an IDA method. In the first type, a single precursor ion is selected and fragmented, and an entire mass range of product ions is mass analyzed. This type of MS/MS scan is referred to as full scan MS/MS or a full product ion MS/MS scan. Full scan MS/MS is typically used for qualitative analysis. In other words, full scan MS/MS is typically used to identify a precursor ion from a pattern of product ions.

In the second type of MS/MS, a single precursor ion is selected and fragmented, one or more product ions are then selected from the resulting product ions, and only the selected product ions are mass analyzed. This type of MS/MS is referred to as multiple reaction monitoring (MRM) or selected reaction monitoring (SRM) or as an MRM or SRM scan or transition. MRM is typically used for quantitative analysis. In other words, MRM is typically used to quantify the amount of a precursor ion in a sample from the intensity of one or more product ions.

In the case of an MRM experiment (or its equivalent) that involves a sample mixture, there are fewer m/z values to deconvolve along the time dimension than in the general spectroscopy or mass spectrometry case. Also, additional information is available from the extracted ion chromatograms (XICs) produced from the MRM experiment. In particular, it is known that a number of XICs can be correlated to a single retention time, shape, and/or ion distribution function. In other words, the XICs of a number of product ions corresponding to the compound of interest should all have the same retention time, shape, and/or ion distribution function.

In addition to IDA, other types of experimental methods or workflows can be performed using a tandem mass spectrometer. Another type of experimental method or workflow is called data independent acquisition (DIA).

In proteomics and many other sample types, for example, the complexity and dynamic range of compounds is very large. This poses challenges for traditional IDA workflows, requiring very high speed MS/MS acquisition to deeply interrogate the sample in order to both identify and quantify a broad range of analytes. As a result, DIA workflows have been used to increase the reproducibility and comprehensiveness of data collection.

In a traditional DIA workflow, the actions of the tandem mass spectrometer are not varied from scan to scan based on data acquired in a previous scan. Instead a precursor ion mass range is selected. All precursor ions in that mass range are then fragmented, and all of the product ions of all of the precursor ions are mass analyzed. This precursor ion mass range can be very narrow, where the likelihood of multiple precursors within the window is small. Or, this window can be large, and the likelihood of multiple precursors within this window is high.

Other names for DIA can include, but are not limited to, MS/MS^ALL or a non-specific fragmentation method. SWATH™ acquisition is also a type of DIA workflow. In SWATH™ acquisition, a precursor ion mass isolation window is stepped across an entire mass range. All the precursor ions in each mass isolation window are fragmented, and all of the product ions of all of the precursor ions in each mass isolation window are mass analyzed.

DIA workflows, however, are not without limitations. For example, in conventional SWATH™ acquisition, it is difficult to de-convolve co-eluting products ions that occur in the same precursor mass isolation window. The non-specific nature of DIA workflows does not provide enough precursor ion information to aid in the deconvolution.

Theoretically, general blind deconvolution algorithms, like those mentioned above, can be used for MRM or MRM-like experiments, where just a few m/z values are available. However, it is unknown if any of these blind deconvolution algorithms have been used specifically for quantitation. Generally, these algorithms are used to identify the correct retention time of a compound of interest. However, each XIC is usually treated as separate independent signal, and using peak finding-deconvolution algorithms for each signal, a peak is segmented or deconvolved by fitting or "various skimming" algorithms, and a segmented or fitted area is reported.

In addition, some mass spectrometry quantitation software has the ability to visualize correlated XICs in an overlay mode. However, this is mainly used to help a user review the results and identify interferences. Some of this software uses some prior knowledge - like expected ratio of transition areas, to automatically flag outlier peaks. An outlier peaks is, for example, a peak that has integrated an interference or a peak that is not complete. In other words, correlated XICs have generally been used for qualitative analysis - finding the right peak at the right position. Correlated XICs have not generally been used to integrate peaks accurately.

In U.S. Provisional Application No. 61/985,335, entitled "Multi-Trace Quantitation" a more narrowly tailored blind deconvolution method for calculating the area of a peak profile from one or more correlated peak profiles is proposed. This method can be applied to the XIC peak profiles obtained from an MRM experiment, for example. A measured XIC can be created by taking intensity values at a single, discrete m/z value or an m/z range from a series of mass spectral scans collected over time. The measured XIC indicates the behavior of a given m/z or m/z range as a function of time, i.e., as a function of retention time. XIC peak profile heights or peak profile areas derived from the measured XICs can then be used, for example, to quantify a compound of interest.

An initial position of an XIC peak profile is found from a measured XIC by using a peak detection algorithm, for example. Using this initial position and a peak model for a compound of interest, an initial shape of the XIC peak profile is determined. The shape can include the width and intensity, for example. From the profile shape, the XIC peak profile area is determined by integrating over the peak shape. Note that the peak shape is not limited to a fitted profile. Instead a peak shape is obtained by means of deconvolution, which can involve fitting, but can also be performed in other ways.

In the case of a compound of interest that has multiple fragment or product ions, additional information can be obtained from the measured XICs of the multiple product ions. This additional information is obtained, for example, by calculating a XIC peak profile for each of the multiple product ions for a specific time period. These multiple correlated XIC peak profiles are then compared. The comparison can be used, for example, to identify an error in one of the XIC peak profiles or to optimize the location or area of an XIC peak profile.

Unfortunately, however, product ions from other compounds can interfere with some of the multiple product ions of a compound of interest. When this occurs the correlated XIC peak profiles of the multiple product ions of a compound of interest can be affected. As a result, the comparison of these correlated XIC peak profiles can provide incorrect results including false negative detections.

Consequently, a need exists in the mass spectrometry industry for additional narrowly tailored blind deconvolution methods for calculating the area of underlying, correlated peak profiles, or profiles that are correlated, but include interferences from ions coming from different parent ions.

## SUMMARY

A system is disclosed for calculating a common component profile from two or more intensity measurements from an intensity distribution. The system includes a mass spectrometer and a processor. The mass spectrometer analyzes one or more compounds, producing a plurality of intensity measurements for the one or more compounds.

The processor receives the plurality of intensity measurements. The processor calculates a plurality of intensity traces for a range of a measured dimension from the plurality of intensity measurements. The processor selects an intensity value for the plurality of intensity traces.

For each measurement point of a plurality of measurement points across the range of a measured dimension, the processor scales each intensity trace of the plurality of intensity traces to have the intensity value at the each measurement point. The processor then calculates a common component profile for the each measurement point that is a function of one or more parameters of the plurality of scaled intensity traces across the plurality of measurement points. The processor then calculates a score for the common component profile that is a function of one or more parameters of the common component profile and one or more parameters of the plurality of scaled intensity traces.

The processor selects an optimum common component profile from the plurality of calculated common component profiles based on the scores of the plurality of calculated common component profiles.

A method is disclosed for calculating a common component profile from two or more intensity measurements from an intensity distribution. A plurality of intensity measurements are received from a mass spectrometer using a processor. The plurality of intensity measurements are produced by the mass spectrometer by analyzing one or more compounds from a mixture. A plurality of intensity traces are calculated for a range of a measured dimension from the plurality of intensity measurements using the processor. An intensity value is selected for the plurality of intensity traces using the processor.

For each measurement point of a plurality of measurement points across the range of a measured dimension, each intensity trace of the plurality of intensity traces is scaled to have the intensity value at the each measurement point. A common component profile is calculated for the each measurement point that is a function of one or more parameters of the plurality of scaled intensity traces across the plurality of measurement points. A score is calculated for the common component profile that is a function of one or more parameters of the common component profile and one or more parameters of the plurality of scaled intensity traces using the processor.

An optimum common component profile is selected from the plurality of calculated common component profiles based on the scores of the plurality of calculated common component profiles using the processor.

A computer program product is disclosed that includes a non-transitory and tangible computer-readable storage medium whose contents include a program with instructions being executed on a processor so as to perform a method for calculating a common component profile from two or more intensity measurements from an intensity distribution. The method includes providing a system, wherein the system comprises one or more distinct software modules, and wherein the distinct software modules comprise a measurement module and an analysis module.

The measurement module receives a plurality of intensity measurements from a mass spectrometer. The plurality of intensity measurements are produced by the mass spectrometer by analyzing one or more compounds from a mixture.

The analysis module calculates a plurality of intensity traces for a range of a measured dimension from the plurality of intensity measurements. The analysis module selects an intensity value for the plurality of intensity traces.

For each measurement point of a plurality of measurement points across the range of a measured dimension, the analysis module scales each intensity trace of the plurality of intensity traces to have the intensity value at the each measurement point. The analysis module calculates a common component profile for the each measurement point that is a function of one or more parameters of the plurality of scaled intensity traces across the plurality of measurement points. The analysis module calculates a score for the common component profile that is a function of one or more parameters of the common component profile and one or more parameters of the plurality of scaled intensity traces.

The analysis module selects an optimum common component profile from the plurality of calculated common component profiles based on the scores of the plurality of calculated common component profiles.

These and other features of the applicant's teachings are set forth herein.

## DESCRIPTION OF THE DRAWINGS

The skilled artisan will understand that the drawings, described below, are for illustration purposes only. The drawings are not intended to limit the scope of the present teachings in any way.

Figure 1 is a block diagram that illustrates a computer system, upon which embodiments of the present teachings may be implemented.

Figure 2 is an exemplary plot showing measured extracted ion chromatograms (XICs) for two product ions of a compound of interest for the same time period, in accordance with various embodiments.

Figure 3 is an exemplary plot showing the common component profile calculated for the measured XICs of Figure 2 at a first time, in accordance with various embodiments.

Figure 4 is an exemplary plot showing the common component profile calculated for the measured XICs of Figure 2 at a second time, in accordance with various embodiments.

Figure 5 is an exemplary plot showing the common component profile calculated for the measured XICs of Figure 2 at a third time, in accordance with various embodiments.

Figure 6 is an exemplary plot showing a residue area calculated for a first measured XIC from the common component profile calculated for the measured XICs of Figure 2 at a third time, in accordance with various embodiments.

Figure 7 is an exemplary plot showing a residue area calculated for a second measured XIC from the common component profile calculated for the measured XICs of Figure 2 at a third time, in accordance with various embodiments.

Figure 8 is an exemplary plot showing the scoring function calculated from Equation (1) superimposed on the plot of Figure 4, in accordance with various embodiments.

Figure 9 is an exemplary plot showing an interfering peak found from subtracting common component profile from a scaled measured XIC, in accordance with various embodiments.

Figure 10 is an exemplary plot showing a common component profile scaled into a product ion peak for a measured XIC of Figure 2, in accordance with various embodiments.

Figure 11 is a schematic diagram showing a system for calculating a common component profile from two or more intensity measurements from an intensity distribution, in accordance with various embodiments.

Figure 12 is a flowchart showing a method for calculating a common component profile from two or more intensity measurements from an intensity distribution, in accordance with various embodiments.

Figure 13 is a schematic diagram of a system that includes one or more distinct software modules that performs a method for calculating a common component profile from two or more intensity measurements from an intensity distribution, in accordance with various embodiments.

Before one or more embodiments of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the phraseology and terminology used herein is for the purpose of description and should not be regarded as limiting.

## DESCRIPTION OF VARIOUS EMBODIMENTS

COMPUTER-IMPLEMENTED SYSTEM

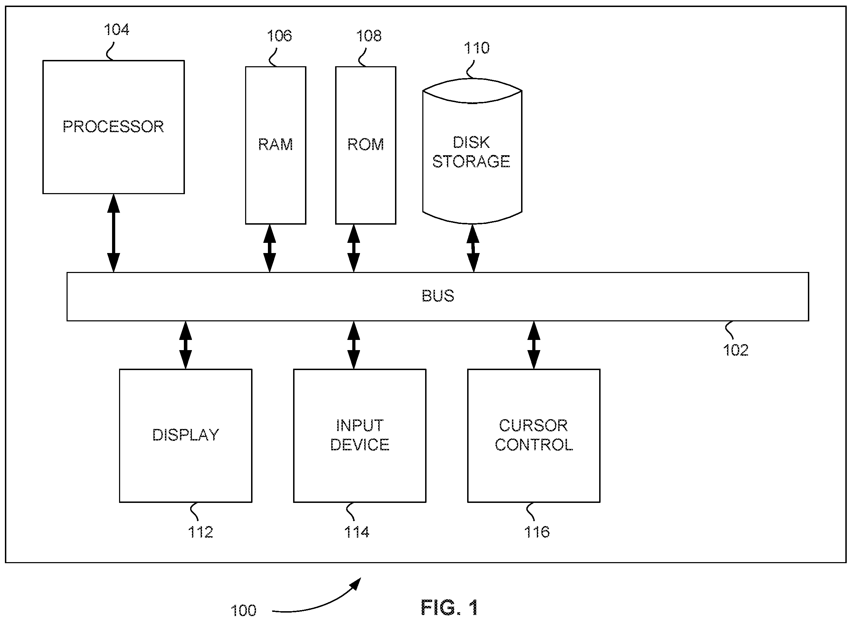

Figure 1 is a block diagram that illustrates a computer system 100, upon which embodiments of the present teachings may be implemented. Computer system 100 includes a bus 102 or other communication mechanism for communicating information, and a processor 104 coupled with bus 102 for processing information. Computer system 100 also includes a memory 106, which can be a random access memory (RAM) or other dynamic storage device, coupled to bus 102 for storing instructions to be executed by processor 104. Memory 106 also may be used for storing temporary variables or other intermediate information during execution of instructions to be executed by processor 104. Computer system 100 further includes a read only memory (ROM) 108 or other static storage device coupled to bus 102 for storing static information and instructions for processor 104. A storage device 110, such as a magnetic disk or optical disk, is provided and coupled to bus 102 for storing information and instructions.

Computer system 100 may be coupled via bus 102 to a display 112, such as a cathode ray tube (CRT) or liquid crystal display (LCD), for displaying information to a computer user. An input device 114, including alphanumeric and other keys, is coupled to bus 102 for communicating information and command selections to processor 104. Another type of user input device is cursor control 116, such as a mouse, a trackball or cursor direction keys for communicating direction information and command selections to processor 104 and for controlling cursor movement on display 112. This input device typically has two degrees of freedom in two axes, a first axis (*i.e.,* x) and a second axis (*i.e.,* y), that allows the device to specify positions in a plane.

A computer system 100 can perform the present teachings. Consistent with certain implementations of the present teachings, results are provided by computer system 100 in response to processor 104 executing one or more sequences of one or more instructions contained in memory 106. Such instructions may be read into memory 106 from another computer-readable medium, such as storage device 110. Execution of the sequences of instructions contained in memory 106 causes processor 104 to perform the process described herein. Alternatively hard-wired circuitry may be used in place of or in combination with software instructions to implement the present teachings. Thus implementations of the present teachings are not limited to any specific combination of hardware circuitry and software.

The term "computer-readable medium" as used herein refers to any media that participates in providing instructions to processor 104 for execution. Such a medium may take many forms, including but not limited to, non-volatile media, volatile media, and transmission media. Non-volatile media includes, for example, optical or magnetic disks, such as storage device 110. Volatile media includes dynamic memory, such as memory 106. Transmission media includes coaxial cables, copper wire, and fiber optics, including the wires that comprise bus 102.

Common forms of computer-readable media include, for example, a floppy disk, a flexible disk, hard disk, magnetic tape, or any other magnetic medium, a CD-ROM, digital video disc (DVD), a Blu-ray Disc, any other optical medium, a thumb drive, a memory card, a RAM, PROM, and EPROM, a FLASH-EPROM, any other memory chip or cartridge, or any other tangible medium from which a computer can read.

Various forms of computer readable media may be involved in carrying one or more sequences of one or more instructions to processor 104 for execution. For example, the instructions may initially be carried on the magnetic disk of a remote computer. The remote computer can load the instructions into its dynamic memory and send the instructions over a telephone line using a modem. A modem local to computer system 100 can receive the data on the telephone line and use an infra-red transmitter to convert the data to an infra-red signal. An infra-red detector coupled to bus 102 can receive the data carried in the infra-red signal and place the data on bus 102. Bus 102 carries the data to memory 106, from which processor 104 retrieves and executes the instructions. The instructions received by memory 106 may optionally be stored on storage device 110 either before or after execution by processor 104.

In accordance with various embodiments, instructions configured to be executed by a processor to perform a method are stored on a computer-readable medium. The computer-readable medium can be a device that stores digital information. For example, a computer-readable medium includes a compact disc read-only memory (CD-ROM) as is known in the art for storing software. The computer-readable medium is accessed by a processor suitable for executing instructions configured to be executed.

The following descriptions of various implementations of the present teachings have been presented for purposes of illustration and description. It is not exhaustive and does not limit the present teachings to the precise form disclosed. Modifications and variations are possible in light of the above teachings or may be acquired from practicing of the present teachings. Additionally, the described implementation includes software but the present teachings may be implemented as a combination of hardware and software or in hardware alone. The present teachings may be implemented with both object-oriented and non-object-oriented programming systems.

Common Component Profile

As described above, identification and quantification of compounds of interest from a mixture, is a difficult problem in spectroscopy and mass spectrometry. Originally this problem was addressed by matching a mixture's spectra with a library of reference compounds. More recently, it has been possible to separate a mixture's spectra into pure component spectra employing a methodology known as blind deconvolution that uses only the measurements of the mixture's spectra.

Some areas of spectroscopy and mass spectrometry include more narrowly defined problems that can benefit from more narrowly tailored blind deconvolution algorithms. One non-limiting example of a more narrowly defined problem occurs in multiple reaction monitoring (MRM) mass spectrometry. In the case of MRM, there are fewer m/z values to deconvolve along the time dimension than in the general spectroscopy or mass spectrometry case. Also, additional information is available from the extracted ion chromatograms (XICs) produced from the MRM experiment.

Theoretically, general blind deconvolution algorithms can be used for MRM or MRM-like experiments, where just a few m/z values are available. However, it is unknown if any of these blind deconvolution algorithms have been used specifically for quantitation. In addition, some mass spectrometry quantitation software has the ability to visualize correlated XICs in an overlay mode. However, this is mainly used to help a user review the results and identify interferences. In general, correlated XICs have generally been used for qualitative analysis - finding the right peak at the right position. Correlated XICs have not generally been used to integrate peaks accurately.

In U.S. Provisional Application No. 61/985,335, entitled "Multi-Trace Quantitation" a more narrowly tailored blind deconvolution method for calculating the area of a peak profile from one or more correlated peak profiles is proposed. When applied XIC peak profiles obtained from an MRM experiment, this method involves calculating a XIC peak profile for each of a number of product ions of a compound of interest and comparing these XIC peak profiles. The comparison can be used, for example, to identify an error in one of the XIC peak profiles or to optimize the location or area of an XIC peak profile.

Unfortunately, however, product ions from other compounds can interfere with some of the multiple product ions of a compound of interest. When this occurs the correlated XIC peak profiles of the multiple product ions of a compound of interest can be affected. As a result, the comparison of these correlated XIC peak profiles can provide incorrect results including false negative detections.

Consequently, a need exists in the mass spectrometry industry for additional narrowly tailored blind deconvolution methods for calculating the area of underlying, correlated peak profiles, or profiles that are correlated, but include interferences from ions coming from different parent ions.

These narrowly tailored blind deconvolution can also be used in qualitative analysis. For example, in various embodiments, a more narrowly tailored blind deconvolution method can be used to identify if XIC has an interference. For example, a more narrowly tailored blind deconvolution method can be used to select a non-interfered portion of an XIC for subsequent analysis (like when processing isotopes from a spectrum to select a mass-to-charge ratio (m/z) range for XIC extraction that is least interfered with).

In various embodiments, a more narrowly tailored blind deconvolution method can be used to evaluate if two or more traces or XICs resemble a common ion distribution within certain time interval, or to find all time points, or retention times (RT), at which those traces resemble a common ion distribution. For example, in an IDA method, such as SWATH™, one goal is, for example, to determine if a certain peptide is present. This is done by extracting target ion XICs (target ions are expected fragments of the peptide of interest). Those XICs are then analyzed with respect to few criteria. One of the important ones is correlation of those XIC profiles. Often when target XICs are interfered, they have low correlation score and it results in false negative detection. Other approaches use RT similarity, but can lead to false positive detection because the RT is the same, but the shapes of the XICs are essentially different. Some approaches use RT similarity first and then shape second to filter out those that have different shape, but then again false negatives can occur in cases where some fragments have an interference. In various embodiments, a more narrowly tailored blind deconvolution method is used to test for the presence or absence of a common ion distribution.

In various embodiments, a more narrowly tailored blind deconvolution method is used to perform quantitative or qualitative analysis without first calculating XIC peak profiles for each of the multiple product ions. Instead, an optimum common component profile is found directly from the measured XICs of the multiple product ions of the compound of interest.

In general, two or more product ion XICs can consist of at least one correlated component (a first independent component) and possibly more other independent components (interferences), where number of interferences could be larger than number of measured XICs. This problem may not have a unique general blind deconvolution solution, because the number of observations (mixtures) is less than the number of independent components. The goal is to accurately extract only one independent component - the one that is of interest. However, it is not necessary to deconvolve the other components (interferences). By calculating an optimum common component profile, the component of interest is directly deconvolved from everything, without having to deconvolve the other independent interfering components.

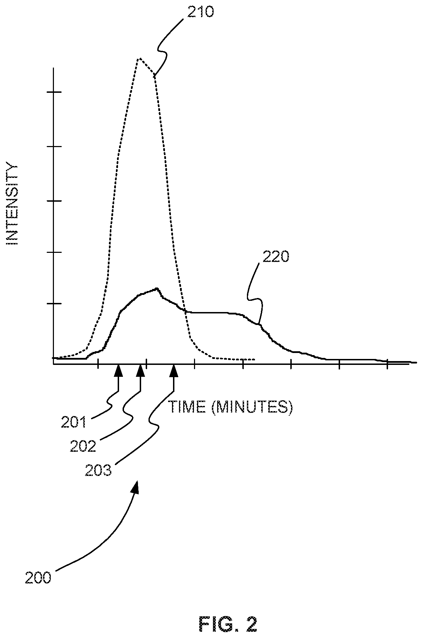

Figure 2 is an exemplary plot 200 showing measured XICs for two product ions of a compound of interest for the same time period, in accordance with various embodiments. XIC 210 of a first product ion of a compound of interest has a greater maximum intensity than XIC 220 of a second product ion of the same compound of interest over the time period shown in plot 200. Although XIC 210 and XIC 220 overlap, they are not well correlated. In other words, they do not appear to have the same shape or even the same apex. This may be due to interference from one or more product ions of other compounds. For example, XIC 220 has intensity values outside of the overlap region with XIC 210 that may be due to an interfering product ion.

As described above, conventionally a first XIC peak profile (not shown) is calculated for XIC 210 and a second XIC peak profile (not shown) is calculated for XIC 220. These two peak profiles are then compared.

Instead, according to various embodiments, a common component profile is calculated from both XIC 210 and XIC 220 at each of two or more time points in plot 200. Plot 200 shows three time points 201, 202, and 203. A common component profile can be calculated for time points 201, 202, and 203, for example. Each of the calculated common component profiles is then scored. The best scoring common component profile is considered to represent the compound of interest. Although the calculation of common component profiles is described in Figure 2 and the following figures with reference to only two measured XICs, the method of calculating common component profiles is not limited to only two measured XICs from two products ions of a compound of interest, but can be applied to two or more measured XICs from two or more products ions of a compound of interest.

A common component profile is the outline of the intersection of all peak areas of all measured XICs scaled to the minimum intensity across all measured XICs at that point. To make the common component profile easy to compare along the time dimension and use same thresholds for any set of data, it is convenient to scale all transitions to a minimum viable intensity value that would be smaller than any intensity measurement. For example, a minimum intensity value that can be used is 1. For simplicity it is assumed that the measured XICs in question have a zero-baseline. A baseline can be removed as a preprocessing step using reliable algorithms for baseline/peak region detection, for example. Also some preprocessing can be done to reduce noise artifacts to a minimum function or to include a noise model in a minimum function when estimating a common component.

In various embodiments, at each time point, all measured XICs are scaled to have the same intensity (1 in this example). The common component profile is then calculated as minimum of all intensities for each time point. Also some preprocessing can be done to reduce noise artifacts to a minimum function or to include a noise model in a minimum function when estimating a common component. Each common component profile for each time point is then scored.

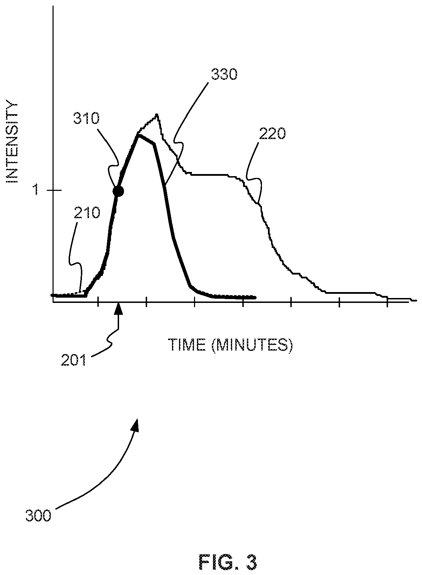

Figure 3 is an exemplary plot 300 showing the common component profile calculated for the measured XICs of Figure 2 at a first time 201, in accordance with various embodiments. In plot 300, measured XIC 210 and measured XIC 220 are scaled so that their intensities at first time 201 are both equal to 1. In other words, measured XIC 210 and measured XIC 220 are scaled to intersect and have an intensity of 1 at intersection point 310. Common component profile 330 is calculated as the minimum of all intensities for each time point. Since scaled measured XIC 210 largely includes the minimum intensities at most time points, common component profile 330 largely follows the shape of scaled measured XIC 210.

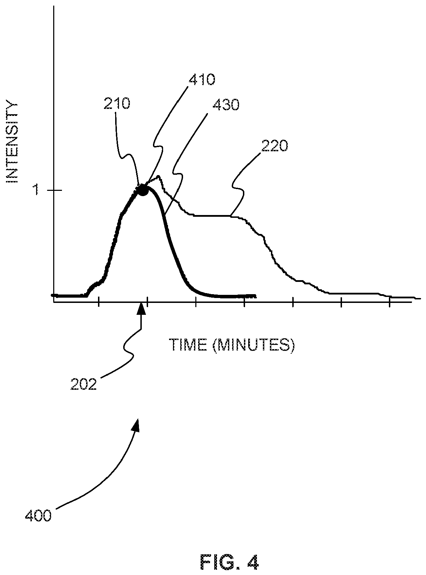

Figure 4 is an exemplary plot 400 showing the common component profile calculated for the measured XICs of Figure 2 at a second time 202, in accordance with various embodiments. In plot 400, measured XIC 210 and measured XIC 220 are scaled so that their intensities at second time 202 are both equal to 1. In other words, measured XIC 210 and measured XIC 220 are scaled to intersect and have an intensity of 1 at intersection point 410. Common component profile 430 is calculated as the minimum of all intensities for each time point. Again, since scaled measured XIC 210 largely includes the minimum intensities at most time points, common component profile 430 also largely follows the shape of scaled measured XIC 210.

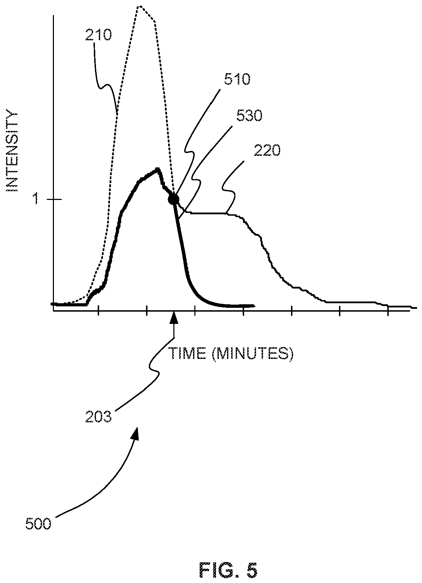

Figure 5 is an exemplary plot 500 showing the common component profile calculated for the measured XICs of Figure 2 at a third time 203, in accordance with various embodiments. In plot 500, measured XIC 210 and measured XIC 220 are scaled so that their intensities at third time 203 are both equal to 1. In other words, measured XIC 210 and measured XIC 220 are scaled to intersect and have an intensity of 1 at intersection point 510. Common component profile 530 is calculated as the minimum of all intensities for each time point. In contrast to Figures 3 and 4, scaled measured XIC 220 has more the minimum intensities at more time points than scaled measured XIC 210. As a result, common component profile 530 follows the shape of scaled measured XIC 220 at more time points than it follows scaled measured XIC 210.

In various embodiments, a score is calculated for each common component profile from the position of common component maxima, the area of common component and areas of measured XIC residues. For each measured XIC, a residue is calculated by subtracting the common component profile from the measured XIC. The common component profile with the best score is found at a time point that maximizes the common component profile area, minimizes residue areas and that corresponds to the apex of the common component profile. The time point of the common component profile with the best score is selected as the true precursor ion time (or retention time).

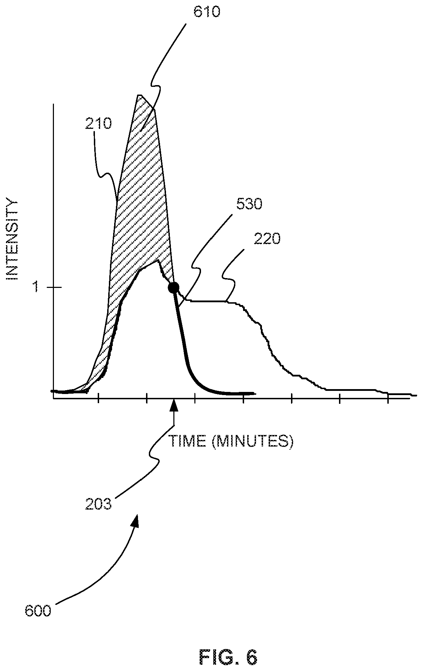

Figure 6 is an exemplary plot 600 showing a residue area 610 calculated for a first measured XIC 210 from the common component profile 530 calculated for the measured XICs of Figure 2 at a third time 203, in accordance with various embodiments. The residue for scaled first measured XIC 210 is calculated by subtracting common component profile 530 from scaled first measured XIC 210. Integrating over the residue produces residue area 610.

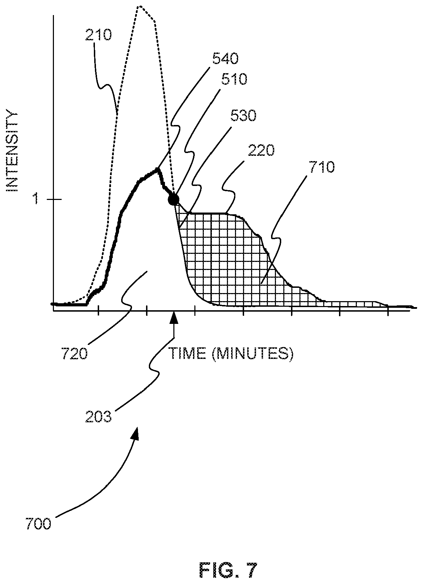

Figure 7 is an exemplary plot 700 showing a residue area 710 calculated for a second measuredXIC 220 from the common component profile 530 calculated for the measured XICs of Figure 2 at a third time 203, in accordance with various embodiments. The residue for scaled second measured XIC 220 is calculated by subtracting common component profile 530 from scaled measured XIC 220. Integrating over the residue produces residue area 710.

Residue area 610 of Figure 6 and residue area 710 of Figure 7 are used to calculate a score for common component profile 530. In addition, the score calculation also includes the area 720 of common component profile 530 and the position of the maxima 540 of common component profile 530 with respect to intersection point 510.

In various embodiments, the score for common component profile 530 is calculated according to the Equation (1) shown below:

$$\text{score}(x) = \text{median}(\textit{Residue\_Area(x,t)}/\textit{Explained\_Area(x)}) \qquad (1)$$

where

$$\textit{Explained \_ Area}(x) = \frac{1}{\max(\textit{Common \_ profile}_x)} * \sum_{\substack{c-w \\ \textit{Common\_ profile}_x(i) \in C}}^{c+w} \textit{Common \_ profile}_x(i)$$

and

$$\textit{Residue\_Area}(x, t) = \sum_{c-w}^{c+w} \textit{Residue\_profile}_x(i, t) \, .$$

C is a subset of time points at which a certain condition is satisfied. One condition, for example, is that the common component intensity is <= 1. Most of the time all points satisfy the condition or the result is the same whether or not the condition is applied. There are cases, however, mostly when a common component has multiple peaks, where the condition is important. The condition is also important if ion of interest has convolved isomers.

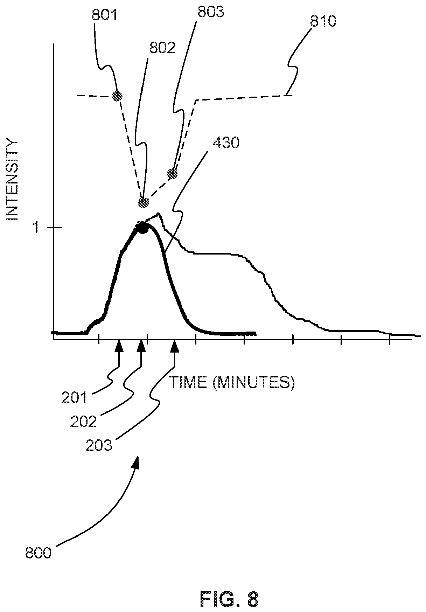

Figure 8 is an exemplary plot 800 showing the scoring function 810 calculated from Equation (1) superimposed on the plot of Figure 4, in accordance with various embodiments. Scoring function 810 calculated from Equation (1) includes scores 801, 802, and 803 corresponding to scores calculated for common component profiles at time points 201, 202, and 203. Plot 800 shows that scoring function 810 has a minimum value at time point 202. As a result, common component profile 430 calculated at time point 202 is found to have the best (minimum) score according to Equation (1).

The optimum common component profile can be used to detect interfering peaks. For example, common component profile 430 in Figure 4 can be used to identify interfering peaks in scaled measured XIC 220 of Figure 4. If common component profile 430 is subtracted from scaled measured XIC 220 of Figure 4 an interfering peak is found.

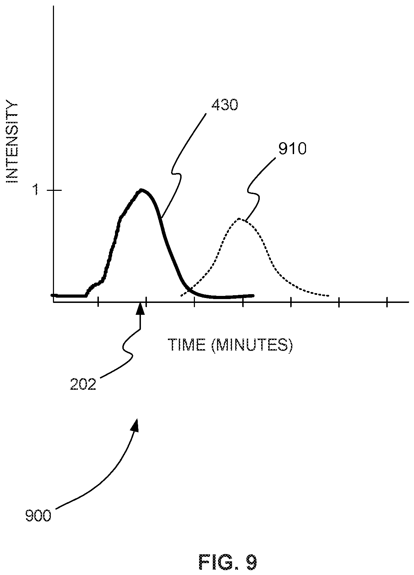

Figure 9 is an exemplary plot 900 showing an interfering peak 910 found from subtracting common component profile 430 from a scaled measured XIC, in accordance with various embodiments. For example, common component profile 430 is subtracted from scaled measured XIC 220 in Figure 4 producing interfering peak 920 of Figure 9.

In addition, each product ion peak of each measured XIC can be reconstructed from the common component profile with the lowest score. The inverse scaling factor used to scale each measured XIC when calculating the common component profile with the lowest score is, in turn, used to scale the common component profile into a product ion peak.

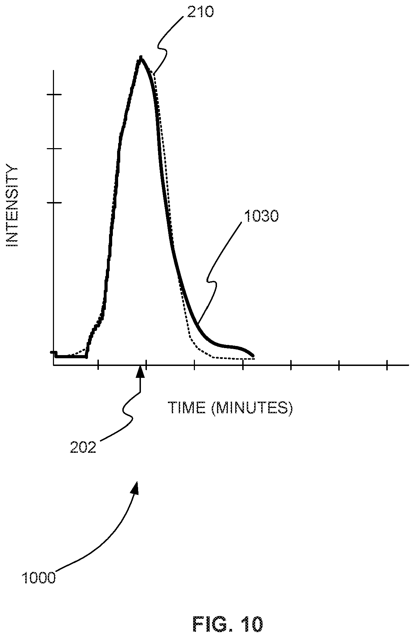

Figure 10 is an exemplary plot 1000 showing a common component profile scaled into a product ion peak for a measured XIC of Figure 2, in accordance with various embodiments. Measured XIC 210 is plotted again in Figure 10. In Figure 4 an optimum common component profile 430 is found. This optimum common component profile 430 is found by scaling measured XIC 210 shown in Figure 2 and Figure 10 by a scaling factor. If the inverse of this scaling factor is applied to optimum common component profile 430 of Figure 4, product ion peak 1030 is produced. Product ion peak 1030 is a reconstructed XIC of measured XIC 210 and should have an area and height very close to the underlying product ion. Reconstructed product ion peak 1030 can be used to quantitate the underlying product ion, for example.

In contrast to conventional methods that try to find the best similarity score between XIC peak profiles, various embodiments find the best common component profile score within a region of interest. As a result, XIC peak profiles that have various interferences can have a poor similarity score, but a high common component profile score at the retention time of a precursor ion. Consequently, various embodiments enable detection and close to optimal extraction (deconvolution) of the peak of interest. A high common component profile score can be the minimum of a scoring function, for example.

Above, calculating a common component profile is described with regard to XIC peaks. However, the method described herein is applicable to any set of correlated signals along any dimension. In addition, the dimension might not be directly measured but obtained after some transformation of a measured dimension. For example, a common component profile can be calculated for spectral peak deconvolution using peaks from any related ion - an isotopic ion (m/z shifted dimension), a neutral loss ion, an isotopic labeled ion, etc.

## System for calculating a common component profile

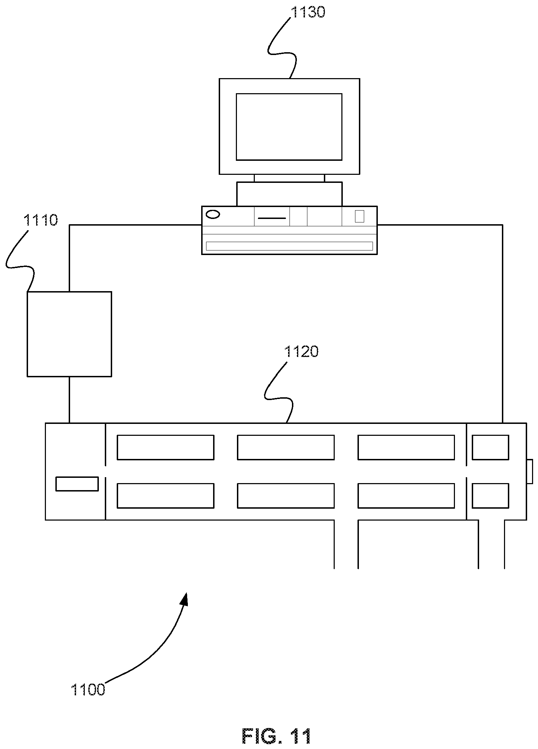

Figure 11 is a schematic diagram showing a system 1100 for calculating a common component profile from two or more intensity measurements from an intensity distribution, in accordance with various embodiments. System 1100 includes mass spectrometer 1120, and processor 1130. In various embodiments system 1100 can also include sample introduction device 1110. The sample introduction device 1110 can provide a sample to mass spectrometer 1120 using one of a variety of techniques. These techniques include, but are not limited to, gas chromatography (GC), liquid chromatography (LC), capillary electrophoresis (CE), or flow injection analysis (FIA).

Sample introduction device 1110 can perform a separation technique that includes, but is not limited to, liquid chromatography, gas chromatography, capillary electrophoresis, or ion mobility. Sample introduction device 1110 separates one or more compounds from a mixture over time.

Mass spectrometer 1120 is, for example, a tandem mass spectrometer and can include one or more physical mass filters and one or more physical mass analyzers. A mass analyzer of mass spectrometer 1120 can include, but is not limited to, a time-of-flight (TOF), quadrupole, an ion trap, a linear ion trap, an orbitrap, or a Fourier transform mass analyzer.

Processor 1130 can be, but is not limited to, a computer, microprocessor, or any device capable of sending and receiving control signals and data from mass spectrometer 1120 and processing data. Processor 1130 can be, for example, computer system 100 of Figure 1. In various embodiments, processor 1130 is in communication with mass spectrometer 1120 and sample introduction device 1110.

Processor 1130 receives the plurality of intensity measurements. Processor 1130 calculates a plurality of intensity traces for a range of a measured dimension from the plurality of intensity measurements. In various embodiments, the plurality of intensity traces include a plurality of intensity traces, the measured dimension includes a time period and the intensity of the known compound is an intensity of a product ion of the known compound.

Processor 1130 selects a minimum intensity value for the plurality of intensity traces. The intensity value can be, for example, a minimum nonzero intensity, a value proportional to the noise amplitude, or in mass spectrometry terms, a single ion strike intensity. Selecting this value ensures that noise does not get amplified, for example. This value is particularly relevant to the scoring function calculation. It enables the use of a constant scoring threshold.

Processor 1130 selects an intensity value of 1, for example. For each measurement point of a plurality of measurement points across the range of a measured dimension, processor 1130 performs three steps. First, processor 1130 scales each intensity trace of the plurality of intensity traces to have the intensity value at each measurement point. Second, processor 1130 calculates a common component profile for the each measurement point that is a function of one or more parameters of the plurality of scaled intensity traces across the plurality of measurement points. Third, processor 1130 calculates a score for the common component profile that is a function of one or more parameters of the common component profile and one or more parameters of the plurality of scaled intensity traces.

Processor 1130 selects an optimum common component profile from the plurality of calculated common component profiles based on the scores of the plurality of calculated common component profiles.

In various embodiments processor 1130 calculates a common component profile for each measurement point as an outline of the minimum intensity of the plurality of scaled intensity traces across the plurality of measurement points. Processor 1130 calculates a score for the common component profile at each measurement point that is a function of a distance between a maxima of the common component profile and the each measurement point, an area of the common component profile, and areas of subtractions of the common component profile from the plurality of scaled intensity traces. Processor 1130 selects an optimum common component profile from the plurality of calculated common component profiles that has a score compared with the scores of other common component profiles that optimally minimizes a distance between a maxima of the common component profile and the each measurement point, maximizes an area of the common component profile, and minimizes areas of subtractions of the common component profile from the plurality of scaled intensity traces.

In various embodiments, a score for the common component profile for each measurement point is calculated according to Equation (1), shown above where the common component profile = $Common\_profile_x$ and a subtraction of the common component profile from a scaled intensity trace = $Residue\_profile_x$.

In various embodiments, processor 1130 further scales an intensity trace of the plurality of intensity traces to have the intensity value at the measurement point used to calculate the optimum common component profile, producing an optimally scaled intensity trace. Processor 1130 then detects at least one interfering peak in the optimally scaled intensity trace by subtracting the optimum common component profile from the at least one optimally scaled intensity trace. Subtracting is just one way of detecting at least one interfering peak in the optimally scaled intensity trace. For example, at least one interfering peak in the optimally scaled intensity trace can be detected by analyzing the optimum common component profile and the at least one optimally scaled intensity trace by ratio, difference, or with respect to expected "noise."

Another example of detecting interference common for all traces is to compare a common component profile to an expected single component profile. Since a single component profile is a synthetic signal and its retention time (RT) is undefined, it could be 'slid' across a common component and the same score as described above could be calculated at each sliding RT position. Practically this means that multi-trace analysis can be performed on measured traces or a simulated trace can be added to the set of measured traces to further refine the score function calculation.

In various embodiments, processor 1130 reconstructs a compound of interest intensity trace corresponding to the optimally scaled intensity trace by scaling the optimum common component profile according to the inverse of a scaling factor used to scale the intensity trace to the optimally scaled intensity trace. Processor 1130 then quantitates a product ion using the reconstructed compound of interest intensity trace, for example.

Method for calculating a common component profile

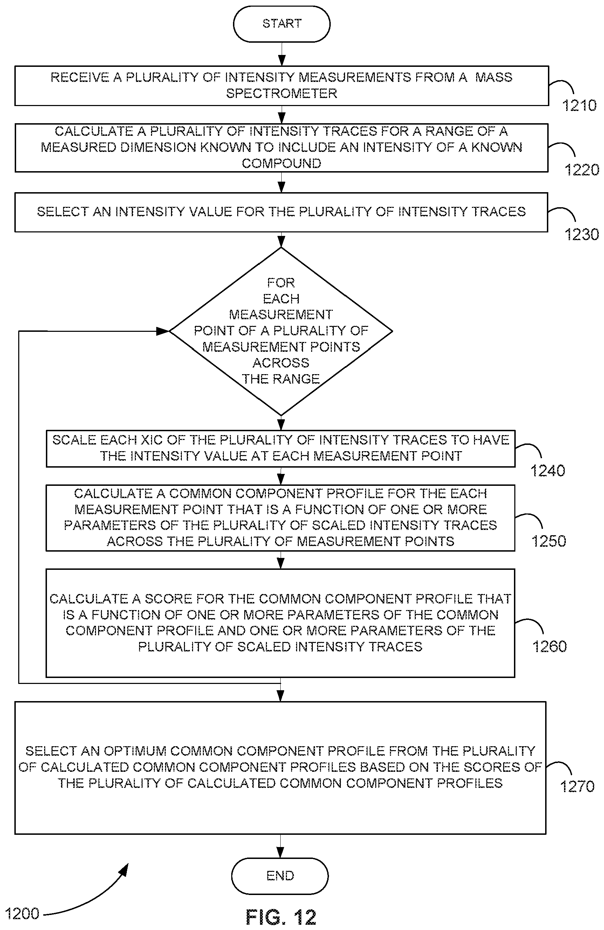

Figure 12 is a flowchart showing a method 1200 for calculating a common component profile from two or more intensity measurements from an intensity distribution, in accordance with various embodiments.

In step 1210 of method 1200, a plurality of intensity measurements are received from a mass spectrometer using a processor. The plurality of intensity measurements are produced by the mass spectrometer by analyzing one or more compounds from a mixture.

In step 1220, a plurality of intensity traces are calculated for a range of a measured dimension known to include an intensity of a known compound of interest using the processor.

In step 1230, an intensity value is selected for the plurality of intensity traces using the processor.

Steps 1240, 1250, and 1260 are executed for each measurement point of a plurality of measurement points across the range of a measured dimension using the processor.

In step 1240, each intensity trace of the plurality of intensity traces is scaled to have the intensity value at each measurement point.

In step 1250, a common component profile is calculated for each measurement point as a function of one or more parameters of the plurality of scaled intensity traces across the plurality of measurement points. In various embodiments, a common component profile is calculated for each measurement point by calculating an outline of the minimum intensity of the plurality of scaled intensity traces across the plurality of measurement points.

In step 1260, a score is calculated for the common component profile that is a function of one or more parameters of the common component profile and one or more parameters of the plurality of scaled intensity traces using the processor. In various embodiments, a score is calculated for the common component profile that is a function of a distance between a maxima of the common component profile and the each measurement point, an area of the common component profile, and areas of subtractions of the common component profile from the plurality of scaled intensity traces.

In step 1270, an optimum common component profile is selected from the plurality of calculated common component profiles based on the scores of the plurality of calculated common component profiles using the processor. In various embodiments, an optimum common component profile is selected that has a score compared with the scores of other common component profiles that optimally minimizes a distance between a maxima of the common component profile and the each measurement point, maximizes an area of the common component profile, and minimizes areas of subtractions of the common component profile from the plurality of scaled intensity traces.

Computer program product for calculating a common component profile

In various embodiments, computer program products include a tangible computer-readable storage medium whose contents include a program with instructions being executed on a processor so as to perform a method for calculating a common component profile from two or more intensity measurements from an intensity distribution. This method is performed by a system that includes one or more distinct software modules.

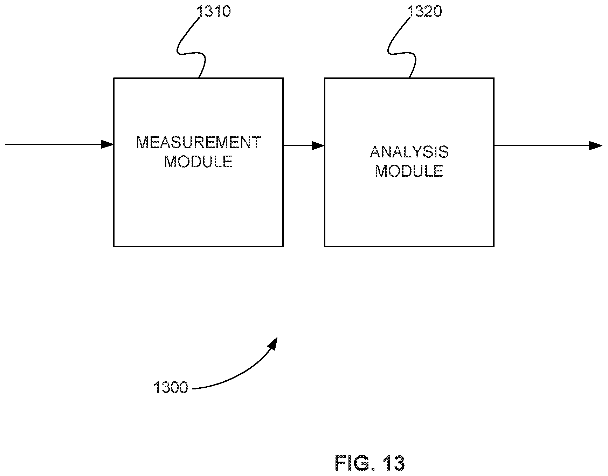

Figure 13 is a schematic diagram of a system 1300 that includes one or more distinct software modules that performs a method for calculating a common component profile from two or more intensity measurements from an intensity distribution, in accordance with various embodiments. System 1300 includes measurement module 1310 and analysis module 1320.

Measurement module 1310 receives a plurality of intensity measurements. The plurality of intensity measurements are produced by the mass spectrometer by analyzing one or more compounds from a mixture.

Analysis module 1320 calculates a plurality of intensity traces for a range of a measured dimension from the plurality of intensity measurements. Analysis module 1320 selects an intensity value for the plurality of intensity traces.

Analysis module 1320 performs three steps for each measurement point of a plurality of measurement points across the range of a measured dimension. First, analysis module 1320 scales each intensity trace of the plurality of intensity traces to have the intensity value at each measurement point.

Second, analysis module 1320 calculates a common component profile for each measurement point as a function of one or more parameters of the plurality of scaled intensity traces across the plurality of measurement points. In various embodiments, a common component profile is calculated for each measurement point by calculating an outline of the minimum intensity of the plurality of scaled intensity traces across the plurality of measurement points.

Third, analysis module 1320 calculates a score for the common component profile that is a function of one or more parameters of the common component profile and one or more parameters of the plurality of scaled intensity traces. In various embodiments, a score is calculated for the common component profile that is a function of a distance between a maxima of the common component profile and the each measurement point, an area of the common component profile, and areas of subtractions of the common component profile from the plurality of scaled intensity traces.

Analysis module 1320 selects an optimum common component profile from the plurality of calculated common component profiles based on the scores of the plurality of calculated common component profiles. In various embodiments, an optimum common component profile is selected that has a score compared with the scores of other common component profiles that optimally minimizes a distance between a maxima of the common component profile and the each measurement point, maximizes an area of the common component profile, and minimizes areas of subtractions of the common component profile from the plurality of scaled intensity traces.

While the present teachings are described in conjunction with various embodiments, it is not intended that the present teachings be limited to such embodiments. On the contrary, the present teachings encompass various alternatives, modifications, and equivalents, as will be appreciated by those of skill in the art, for example, peaks from any related ion - an isotopic ion (m/z shifted dimension), a neutral loss ion, an isotopic labeled ion, etc.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the scope of the various embodiments.

**Claims**

1. A system (1100) for calculating a common component profile from two or more intensity measurements from an intensity distribution, said system comprising:

   a mass spectrometer (1120) that analyzes one or more compounds, producing a plurality of intensity measurements for the one or more compounds; and
   a processor (1130) configured to:

   receive the plurality of intensity measurements,
   calculate a plurality of intensity traces for a range of a measured dimension from the plurality of intensity measurements,
   **characterized in that** the processor (1030) is furthermore configure to:

   select an intensity value for the plurality of intensity traces,
   for each measurement point of a plurality of measurement points across the range of a measured dimension,
   scale each intensity trace of the plurality of intensity traces to have the intensity value at the each measurement point,
   calculate a common component profile for the each measurement point that is a function of one or more parameters of the plurality of scaled intensity traces across the plurality of measurement points, and
   calculate a score for the common component profile that is a function of one or more parameters of the common component profile and one or more parameters of the plurality of scaled intensity traces, and
   select an optimum common component profile from the plurality of calculated common component profiles based on the scores of the plurality of calculated common component profiles.

   wherein the processor (1130):

   for the each measurement, is configured to calculate a common component profile and
   calculate a score for the common component profile by:

   calculating a common component profile for the each measurement point as an outline of the minimum intensity of the plurality of scaled intensity traces across the plurality of measurement points, and
   calculating a score for the common component profile that is a function of a distance between a maxima of the common component profile and the each measurement point, an area of the common component profile, and areas of subtractions of the common component profile from the plurality of scaled intensity traces, and
   select an optimum common component profile by:
   selecting an optimum common component profile from the plurality of calculated common component profiles that has a score compared with the scores of other common component profiles that optimally minimizes a distance between a maxima of the common component profile and the each measurement point, maximizes an area of the common component profile, and minimizes areas of subtractions of the common component profile from the plurality of scaled intensity traces.

2. The system of any one of the preceding claims, wherein the intensity value for the plurality of intensity traces comprises 1.

3. The system of any one of the preceding claims, wherein a score for the common component profile is calculated according to the following function:

$$\text{score(x)= median(Residue Area(x,t)/Explained Area(x))}$$

where:

$$Explained\_Area(x) = \frac{1}{\max(Common\_profile_x)} * \sum_{\substack{c-w \\ Common\_profile_x(i) \in C}}^{c+w} Common\_profile_x(i)$$

the common component profile = $Common\_profile_x$

$$Residue\_Area(x,t) = \sum_{c-w}^{c+w} Residue\_profile_x(i,t)$$

and a subtraction of the common component profile from a scaled intensity trace = $Residue\_profile_x$.

4. The system of any one of the preceding claims, wherein the processor (1030) is furthermore configured to:
scale an intensity trace of the plurality of intensity traces to have the intensity value at the measurement point used to calculate the optimum common component profile, producing an optimally scaled intensity trace; and/or:
detect at least one interfering peak in the optimally scaled intensity trace by comparing the optimum common component profile and the at least one optimally scaled intensity trace; and/or:
compare the optimum common component profile and the at least one optimally scaled intensity trace by subtracting the optimum common component profile from the at least one optimally scaled intensity trace.

5. The system of claim 5, wherein the processor (1130) is furthermore configured to:
reconstruct a compound of interest intensity trace corresponding to the optimally scaled intensity trace by scaling the optimum common component profile according to the inverse of a scaling factor used to scale the intensity trace to the optimally scaled intensity trace.

6. The system of claim 6, wherein the processor (1130) is furthermore configured to:
quantitate a product ion using the reconstructed compound of interest intensity trace.

7. A method for calculating a common component profile from two or more intensity measurements from an intensity distribution, said method comprising:

receiving a plurality of intensity measurements from a mass spectrometer (1120) using a processor (1130), wherein the plurality of intensity measurements are produced by the mass spectrometer (1120) by analyzing one or more compounds from a mixture;
calculating a plurality of intensity traces for a range of a measured dimension from the plurality of intensity measurements using the processor (1130);
selecting an intensity value for the plurality of intensity traces using the processor (1130);
for each measurement point of a plurality of measurement points across the range of a measured dimension,

scaling each intensity trace of the plurality of intensity traces to have the intensity value at the each measurement point,
calculating a common component profile for the each measurement point that is a function of one or more parameters of the plurality of scaled intensity traces across the plurality of measurement points, and
calculating a score for the common component profile that is a function of one or more parameters of the common component profile and one or more parameters of the plurality of scaled intensity traces using the processor (1130); and
selecting an optimum common component profile from the plurality of calculated common component profiles based on the scores of the plurality of calculated common component profiles using the processor (1130).

wherein:

for the each measurement, calculating a common component profile and calculating a score for the common component profile by:

calculating a common component profile for the each measurement point as an outline of the minimum intensity of the plurality of scaled intensity traces across the plurality of measurement points, and calculating a score for the common component profile that is a function of a distance between a maxima of the common component profile and the each measurement point, an area of the common component profile, and areas of subtractions of the common component profile from the plurality of scaled intensity traces, and

selecting an optimum common component profile by:
selecting an optimum common component profile from the plurality of calculated common component profiles that has a score compared with the scores of other common component profiles that optimally minimizes a distance between a maxima of the common component profile and the each measurement point, maximizes an area of the common component profile, and minimizes areas of subtractions of the common component profile from the plurality of scaled intensity traces.

8. The method of claim 7, wherein the intensity value for the plurality of intensity traces comprises 1.

9. The method of any one of claims 7 to 8, wherein a score for the common component profile is calculated according to the following function:

$$score(x) = median(Residue\_Area(x,t)/Explained\_Area(x)$$

where:

$$Explained\_Area(x) = \frac{1}{\max(Common\_profile_x)} * \sum_{\substack{c-w \\ Common\_profile_x(i) \in C}}^{c+w} Common\_profile_x(i)$$

the common component profile = $Common\_profile_x$,

$$Residue\_Area(x,t) = \sum_{c-w}^{c+w} Residue\_profile_x(i,t)$$

.

and a subtraction of the common component profile from a scaled intensity trace = $Residue\_profile_x$.

10. The method of any one of claims 7 to 9, further comprising:
scaling an intensity trace of the plurality of intensity traces to have the intensity value at the measurement point used to calculate the optimum common component profile using the processor (1130), producing an optimally scaled intensity trace; and/or:
detecting at least one interfering peak in the optimally scaled intensity trace by comparing the optimum common component profile and the at least one optimally scaled intensity trace using the processor (1130); and/or:
wherein the optimum common component profile and the at least one optimally scaled intensity trace are compared by subtracting the optimum common component profile from the at least one optimally scaled intensity trace.

11. The method of claim 10, further comprising:

reconstructing a compound of interest intensity trace corresponding to the optimally scaled intensity trace by scaling the optimum common component profile according to the inverse of a scaling factor used to scale the intensity trace to the optimally scaled intensity trace using the processor (1130);
said method optionally further comprising:
quantitating a product ion using the reconstructed compound of interest intensity trace using the processor (1130).

**12.** A computer program product, comprising a non-transitory and tangible computer-readable storage medium whose contents include a program with instructions being executed on a processor (1130) so as to perform a method for calculating a common component profile from two or more intensity measurements from an intensity distribution, comprising:

providing a system (1300), wherein the system comprises one or more distinct software modules, and wherein the distinct software modules comprise a measurement module (1310) and an analysis (1320) module;
receiving a plurality of intensity measurements from a mass spectrometer (1120) using the measurement module (1310), wherein the plurality of intensity measurements are produced by the mass spectrometer (1120) by analyzing one or more compounds from a mixture;
calculating a plurality of intensity traces for a range of a measured dimension from the plurality of intensity measurements using the analysis module (1320);
selecting an intensity value for the plurality of intensity traces using the analysis module (1320);
for each measurement point of a plurality of measurement points across the range of a measured dimension,

scaling each intensity trace of the plurality of intensity traces to have the intensity value at the each measurement point,
calculating a common component profile for the each measurement point that is a function of one or more parameters of the plurality of scaled intensity traces across the plurality of measurement points, and
calculating a score for the common component profile that is a function of one or more parameters of the common component profile and one or more parameters of the plurality of scaled intensity traces using the analysis module (1320); and

selecting an optimum common component profile from the plurality of calculated common component profiles based on the scores of the plurality of calculated common component profiles using the analysis module (1320). wherein:

for the each measurement, calculating a common component profile and calculating a score for the common component profile by

calculating a common component profile for the each measurement point as an outline of the minimum intensity of the plurality of scaled intensity traces across the plurality of measurement points, and
calculating a score for the common component profile that is a function of a distance between a maxima of the common component profile and the each measurement point, an area of the common component profile, and areas of subtractions of the common component profile from the plurality of scaled intensity traces, and
selecting an optimum common component profile by:
selecting an optimum common component profile from the plurality of calculated common component profiles that has a score compared with the scores of other common component profiles that optimally minimizes a distance between a maxima of the common component profile and the each measurement point, maximizes an area of the common component profile, and minimizes areas of subtractions of the common component profile from the plurality of scaled intensity traces.

**Patentansprüche**

**1.** System (1100) zum Berechnen eines gemeinsamen Komponentenprofils aus zwei oder mehr Intensitätsmessungen aus einer Intensitätsverteilung, das System umfassend:

ein Massenspektrometer (1120), das eine oder mehrere Verbindungen analysiert, erzeugend eine Vielzahl von Intensitätsmessungen für die eine oder mehreren Verbindungen; und
einen Prozessor (1130), der konfiguriert ist, um:

die Vielzahl von Intensitätsmessungen zu empfangen,
eine Vielzahl von Intensitätskurven für einen Bereich einer gemessenen Dimension aus der Vielzahl von Intensitätsmessungen zu berechnen,
**dadurch gekennzeichnet, dass** der Prozessor (1030) ferner konfiguriert ist, um:

einen Intensitätswert für die Vielzahl von Intensitätskurven auszuwählen,

für jeden Messpunkt einer Vielzahl von Messpunkten über den Bereich einer gemessenen Abmessung, jede Intensitätskurve der Vielzahl von Intensitätskurven zu skalieren, um den Intensitätswert an jedem Messpunkt zu erhalten.

ein gemeinsames Komponentenprofil für jeden Messpunkt zu berechnen, das eine Funktion eines oder mehrerer Parameter der Vielzahl von skalierten Intensitätskurven über der Vielzahl von Messpunkten ist, und

eine Bewertung für das gemeinsame Komponentenprofil zu berechnen, die eine Funktion eines oder mehrerer Parameter des gemeinsamen Komponentenprofils und eines oder mehrerer Parameter der Vielzahl von skalierten Intensitätskurven ist, und

ein optimales gemeinsames Komponentenprofil aus der Vielzahl von berechneten gemeinsamen Komponentenprofilen basierend auf den Bewertungen der Vielzahl von berechneten gemeinsamen Komponentenprofilen auszuwählen,

wobei der Prozessor (1130):

für jede Messung konfiguriert ist, um ein gemeinsames Komponentenprofil zu berechnen und eine Bewertung für das gemeinsame Komponentenprofil zu berechnen durch:

Berechnen eines gemeinsamen Komponentenprofils für jeden Messpunkt als einen Umriss der minimalen Intensität der Vielzahl von skalierten Intensitätskurven über der Vielzahl von Messpunkten, und

Berechnen einer Bewertung für das gemeinsame Komponentenprofil, das eine Funktion eines Abstands zwischen einem Maximum des gemeinsamen Komponentenprofils und jedem Messpunkt, einem Gebiet des gemeinsamen Komponentenprofils und Gebieten von Subtraktionen des gemeinsamen Komponentenprofils von der Vielzahl der skalierten Intensitätskurven ist, und

Auswählen eines optimalen gemeinsamen Komponentenprofils durch: Auswählen eines optimalen gemeinsamen Komponentenprofils aus der Vielzahl von berechneten gemeinsamen Komponentenprofilen, das eine Bewertung verglichen mit den Bewertungen anderer gemeinsamer Komponentenprofile aufweist, das einen Abstand zwischen einem Maximum des gemeinsamen Komponentenprofils und jedem Messpunkt optimal minimiert, ein Gebiet des gemeinsamen Komponentenprofils maximiert, und Gebiete von Subtraktionen des gemeinsamen Komponentenprofils von der Vielzahl von skalierten Intensitätskurven minimiert.

2. System nach einem der vorhergehenden Ansprüche, wobei der Intensitätswert für die Vielzahl Intensitätskurven 1 umfasst.

3. System nach einem der vorhergehenden Ansprüche, wobei eine Bewertung für das gemeinsame Komponentenprofil gemäß der folgenden Funktion berechnet wird:

$$\text{Bewertung (x)} = \text{median}(\text{Residue\_Area}(x, t)/\text{Explained\_Area}(x)$$

wobei:

$$Explained\_Area(x) = \frac{1}{\max(Common\_profile_x)} * \sum_{\substack{C-W \\ Common\_profile_x(i) \times C}}^{C+W} Common\_profile_x(i)$$

das gemeinsame Komponentenprofil = $Common\_profile_x$

$$Residue\_Area(x,t) = \Sigma Residue\_profile_x(i, t)$$

und eine Subtraktion des gemeinsamen Komponentenprofils von einer skalierten Intensitätskurve = $Residue\_profile_x$.

4. System nach einem der vorhergehenden Ansprüche, wobei der Prozessor (1030) ferner konfiguriert ist, um:

eine Intensitätskurve der Vielzahl von Intensitätskurven zu skalieren, um den Intensitätswert an dem Messpunkt zu erhalten, der zum Berechnen des optimalen gemeinsamen Komponentenprofils verwendet wird, wodurch eine optimal skalierte Intensitätskurve erzeugt wird. und/oder:
mindestens einen interferierenden Peak in der optimal skalierten Intensitätskurve durch Vergleichen des optimalen gemeinsamen Komponentenprofils und der mindestens einen optimal skalierten Intensitätskurve zu ermitteln; und/oder:
das optimale gemeinsame Komponentenprofil und die mindestens eine optimal skalierte Intensitätskurve durch Substrahieren des optimalen gemeinsamen Komponentenprofils von der mindestens einen optimal skalierten Intensitätskurve zu vergleichen.

5. System nach Anspruch 5, wobei der Prozessor (1130) ferner konfiguriert ist, um:
eine Intensitätskurve einer interessierenden Verbindung, die der optimal skalierten Intensitätskurve entspricht, durch Skalieren des optimalen gemeinsamen Komponentenprofils gemäß dem Inversen eines Skalierungsfaktors, der zum Skalieren der Intensitätskurve auf die optimal skalierte Intensitätskurve verwendet wird, zu rekonstruieren.

6. System nach Anspruch 6, wobei der Prozessor (1130) ferner konfiguriert ist, um:
ein Produktion unter Verwendung der rekonstruierten Intensitätskurve der interessierenden Verbindung zu quantifizieren.

7. Verfahren zum Berechnen eines gemeinsamen Komponentenprofils aus zwei oder mehr Intensitätsmessungen aus einer Intensitätsverteilung, das Verfahren umfassend:

Empfangen einer Vielzahl von Intensitätsmessungen von einem Massenspektrometer (1120) unter Verwendung eines Prozessors (1130), wobei die Vielzahl von Intensitätsmessungen von dem Massenspektrometer (1120) durch Analysieren einer oder mehrerer Verbindungen aus einem Gemisch erzeugt werden;
Berechnen einer Vielzahl von Intensitätskurven für einen Bereich einer gemessenen Dimension aus der Vielzahl von Intensitätsmessungen unter Verwendung des Prozessors (1130);
Auswählen eines Intensitätswerts für die Vielzahl von Intensitätskurven unter Verwendung des Prozessors (1130);
für jeden Messpunkt einer Vielzahl von Messpunkten über den Bereich einer gemessenen Abmessung,
Skalieren jeder Intensitätskurve der Vielzahl von Intensitätskurven, um den Intensitätswert an jedem Messpunkt zu erhalten,
Berechnen eines gemeinsamen Komponentenprofils für jeden Messpunkt, das eine Funktion eines oder mehrerer Parameter der mehreren skalierten Intensitätskurven über die Vielzahl von Messpunkten ist, und
Berechnen einer Bewertung für das gemeinsame Komponentenprofil, das eine Funktion eines oder mehrerer Parameter des gemeinsamen Komponentenprofils und eines oder mehrerer Parameter der Vielzahl von skalierten Intensitätskurven unter Verwendung des Prozessors (1130) ist, und
Auswählen eines optimalen gemeinsamen Komponentenprofils aus der Vielzahl von berechneten gemeinsamen Komponentenprofilen basierend auf den Bewertungen der Vielzahl von berechneten mehreren berechneten Komponentenprofilen unter Verwendung des Prozessors (1130),
wobei:
für jede Messung ein gemeinsames Komponentenprofil berechnet wird und eine Bewertung für das gemeinsame Komponentenprofil berechnet wird durch:

Berechnen eines gemeinsamen Komponentenprofils für jeden Messpunkt als einen Umriss der minimalen Intensität der Vielzahl von skalierten Intensitätskurven über der Vielzahl von Messpunkten, und
Berechnen einer Bewertung für das gemeinsame Komponentenprofil, das eine Funktion eines Abstands zwischen einem Maximum des gemeinsamen Komponentenprofils und jedem Messpunkt, einem Gebiet des gemeinsamen Komponentenprofils und Gebieten von Subtraktionen des gemeinsamen Komponentenprofils von der Vielzahl der skalierten Intensitätskurven ist, und
Auswählen eines optimalen gemeinsamen Komponentenprofils durch:
Auswählen eines optimalen gemeinsamen Komponentenprofils aus der Vielzahl von berechneten gemeinsamen Komponentenprofilen, das eine Bewertung im Vergleich zu den Bewertungen anderer gemeinsamer Komponentenprofile aufweist, das einen Abstand zwischen einem Maximum des gemeinsamen Komponentenprofils und jedem Messpunkt optimal minimiert, ein Gebiet des gemeinsamen Komponentenprofils maximiert, und Gebiete von Subtraktionen des gemeinsamen Komponentenprofils von der Vielzahl von skalierten Intensitätskurven minimiert.

8. Verfahren nach Anspruch 7, wobei der Intensitätswert für die Vielzahl von Intensitätskurven 1 umfasst.

9. Verfahren einem der Ansprche 7 bis 8, wobei eine Bewertung für das gemeinsame Komponentenprofil gemäß der folgenden Funktion berechnet wird:

$$\text{Bewertung}(x) = \text{median}(Residue\_Area(x, t)/Explained\_Area(x)$$

wobei:

$$Explained\_Area(x) = \frac{1}{\max(Common\_profile_x)} * \sum_{\substack{c-w \\ Common\_profile_x(i) \in C}}^{c+w} Common\_profile_x(i)$$

das gemeinsame Komponentenprofil = $Common\_profile_x$,

$$Residue\_Area(x,t) = \sum_{c-w}^{c+w} Residue\_profile_x(i,t)$$

und eine Subtraktion des gemeinsamen Komponentenprofils von einer skalierten Intensitätskurve = $Residue\_profile_x$.

10. Verfahren nach einem der Ansprüche 7 bis 9, ferner umfassend:
    Skalieren einer Intensitätskurve der Vielzahl von Intensitätskurven, um den Intensitätswert an dem Messpunkt zu erhalten, der zum Berechnen des optimalen gemeinsamen Komponentenprofils unter Verwendung des Prozessors (1130) verwendet wird, wodurch eine optimal skalierte Intensitätskurve erzeugt wird; und/oder:
    Ermitteln mindestens eines interferierenden Peaks in der optimal skalierten Intensitätskurve durch Vergleichen des optimalen gemeinsamen Komponentenprofils und der mindestens einen optimal skalierten Intensitätskurve unter Verwendung des Prozessors (1130); und/oder:
    wobei das optimale gemeinsame Komponentenprofil und die mindestens eine optimal skalierte Intensitätskurve durch Substrahieren des optimalen gemeinsamen Komponentenprofils von der mindestens einen optimal skalierten Intensitätskurve verglichen werden.

11. Verfahren nach Anspruch 10, ferner umfassend:

    Rekonstruieren einer Intensitätskurve einer interessierenden Verbindung, die der optimal skalierten Intensitätskurve entspricht, durch Skalieren des optimalen gemeinsamen Komponentenprofils gemäß dem Inversen eines Skalierungsfaktors, der zum Skalieren der Intensitätskurve auf die optimal skalierte Intensitätskurve verwendet wird, unter Verwendung des Prozessors (1130);
    das Verfahren optional ferner umfassend:
    Quantifizieren eines Produktions unter Verwendung der rekonstruierten Intensitätskurve der interessierenden unter Verwendung des Prozessors (1130).

12. Computerprogrammprodukt, umfassend ein nichtflüchtiges und materielles computerlesbares Speichermedium, dessen Inhalte ein Programm mit Anweisungen beinhalten, die auf einem Prozessor (1130) ausgeführt werden, um ein Verfahren zum Berechnen eines gemeinsamen Komponentenprofils von zwei oder mehreren Intensitätsmessungen von einer Intensitätsverteilung durchzuführen, umfassend:

    Bereitstellen eines Systems (1300), wobei das System ein oder mehrere verschiedene Softwaremodule umfasst, und wobei die verschiedenen Softwaremodule ein Messmodul (1310) und ein Analysemodul (1320) umfassen;
    Empfangen einer Vielzahl von Intensitätsmessungen von einem Massenspektrometer (1120) unter Verwendung des Messmoduls (1310), wobei die Vielzahl von Intensitätsmessungen von dem Massenspektrometer (1120) durch Analysieren einer oder mehrerer Verbindungen aus einem Gemisch erzeugt werden;
    Berechnen einer Vielzahl von Intensitätskurven für einen Bereich einer gemessenen Abmessung aus der Vielzahl von Intensitätsmessungen unter Verwendung des Analysemoduls (1320);

Auswählen eines Intensitätswerts für die Vielzahl von Intensitätskurven unter Verwendung des Analysemoduls (1320);

für jeden Messpunkt einer Vielzahl von Messpunkten über den Bereich einer gemessenen Abmessung, Skalieren jeder Intensitätskurve der Vielzahl von Intensitätskurven, um den Intensitätswert an jedem Messpunkt zu erhalten,

Berechnen eines gemeinsamen Komponentenprofils für jeden Messpunkt, das eine Funktion eines oder mehrerer Parameter der mehreren skalierten Intensitätskurven über die Vielzahl von Messpunkten ist, und

Berechnen einer Bewertung für das gemeinsame Komponentenprofil, das eine Funktion eines oder mehrerer Parameter des gemeinsamen Komponentenprofils und eines oder mehrerer Parameter der Vielzahl von skalierten Intensitätskurven unter Verwendung des Analysemoduls (1320) ist, und

Auswählen eines optimales gemeinsamen Komponentenprofils aus der Vielzahl von berechneten gemeinsamen Komponentenprofilen basierend auf den Bewertungen der Vielzahl von berechneten Komponentenprofilen unter Verwendung des Analysemoduls (1320),

wobei:

für jede Messung ein gemeinsames Komponentenprofil berechnet wird und eine Bewertung für das gemeinsame Komponentenprofil berechnet wird durch

Berechnen eines gemeinsamen Komponentenprofils für jeden Messpunkt als einen Umriss der minimalen Intensität der Vielzahl von skalierten Intensitätskurven über der Vielzahl von Messpunkten, und

Berechnen einer Bewertung für das gemeinsame Komponentenprofil, das eine Funktion eines Abstands zwischen einem Maximum des gemeinsamen Komponentenprofils und jedem Messpunkt, einem Gebiet des gemeinsamen Komponentenprofils und Gebieten von Subtraktionen des gemeinsamen Komponentenprofils von der Vielzahl der skalierten Intensitätskurven ist, und

Auswählen eines optimalen gemeinsamen Komponentenprofils durch:

Auswählen eines optimalen gemeinsamen Komponentenprofils aus der Vielzahl von berechneten gemeinsamen Komponentenprofilen, das eine Bewertung im Vergleich zu den Bewertungen anderer gemeinsamer Komponentenprofile aufweist, das einen Abstand zwischen einem Maximum des gemeinsamen Komponentenprofils und jedem Messpunkt optimal minimiert, einen Bereich des gemeinsamen Komponentenprofils maximiert, und Bereiche von Subtraktionen des gemeinsamen Komponentenprofils von der Vielzahl von skalierten Intensitätskurven minimiert.

## Revendications

1.  Système (1100) destiné à calculer un profil de composante commun à partir d'au moins deux mesures d'intensité issues d'une distribution d'intensité, ledit système comprenant :

    un spectromètre de masse (1120) qui analyse au moins un composé, produisant une pluralité de mesures d'intensité pour l'au moins un composé ; et
    un processeur (1130) configuré pour :

    recevoir la pluralité de mesures d'intensité,
    calculer une pluralité de traces d'intensité pour une plage d'une dimension mesurée à partir de la pluralité de mesures d'intensité,
    **caractérisé en ce que** le processeur (1030) est en outre configuré pour :

    sélectionner une valeur d'intensité pour la pluralité de traces d'intensité,
    pour chaque point de mesure d'une pluralité de points de mesure sur la plage d'une dimension mesurée, mettre à l'échelle chaque trace d'intensité de la pluralité de traces d'intensité pour avoir la valeur d'intensité à chaque point de mesure,
    calculer un profil de composante commun pour chaque point de mesure qui est fonction d'au moins un paramètre de la pluralité de traces d'intensité mises à l'échelle sur la pluralité de points de mesure, et calculer un score pour le profil de composante commun qui est fonction d'au moins un paramètre du profil de composante commun et d'au moins un paramètre de la pluralité de traces d'intensité mises à l'échelle, et
    sélectionner un profil de composante commun optimal à partir de la pluralité de profils de composante communs calculés sur la base des scores de la pluralité de profils de composante communs calculés.
    dans lequel le processeur (1130) :

pour chaque mesure, est configuré pour calculer un profil de composante commun et calculer un score pour le profil de composante commun par :

le calcul d'un profil de composante commun pour chaque point de mesure en tant que contour de l'intensité minimale de la pluralité de traces d'intensité mises à l'échelle sur la pluralité de points de mesure, et

le calcul d'un score pour le profil de composante commun qui est fonction d'une distance entre un maximum du profil de composante commun et chaque point de mesure, une aire du profil de composante commun et des aires de soustractions du profil de composante commun de la pluralité de traces d'intensité mises à l'échelle, et

la sélection d'un profil de composante commun optimal par : la sélection d'un profil de composante commun optimal à partir de la pluralité de profils de composante communs calculés qui a un score comparé aux scores d'autres profils de composante communs qui minimise de manière optimale une distance entre un maximum du profil de composante commun et chaque point de mesure, maximise une aire du profil de composante commun et minimise des aires de soustractions du profil de composante commun de la pluralité de traces d'intensité mises à l'échelle.

2. Système selon l'une quelconque des revendications précédentes, dans lequel la valeur d'intensité pour la pluralité de traces d'intensité comprend 1.

3. Système selon l'une quelconque des revendications précédentes, dans lequel un score pour le profil de composante commun est calculé selon la fonction suivante :

$$Bewertung(x) = median(Residue\_Area(x, t)/Explained\_A$$

où :

$$Explained\_Area(x) = \frac{1}{\max(Common\_profile_x)} * \sum_{\substack{c-w \\ Common\_profile_x(i) \in C}}^{c+w} Common\_profile_x(i)$$

profil de composante commun = $Common\_profile_x$

$$Residue\_Area(x,t) = \Sigma Residue\_profile_x(i, t)$$

et soustraction du profil de composante commun d'une trace d'intensité mise à l'échelle = $Residue\_profile_x$.

4. Système selon l'une quelconque des revendications précédentes, dans lequel le processeur (1030) est en outre configuré :

mettre à l'échelle une trace d'intensité de la pluralité de traces d'intensités pour avoir la valeur d'intensité au point de mesure utilisé pour calculer le profil de composante commun optimal et ainsi produire une trace d'intensité mise à l'échelle de manière optimale ; et/ou :

détecter au moins un pic d'interférence dans la trace d'intensité mise à l'échelle de manière optimale par comparaison du profil de composante commun optimal et de l'au moins une trace d'intensité mise à l'échelle de manière optimale ; et/ou

comparer le profil de composante commun optimal et l'au moins une trace d'intensité mise à l'échelle de manière optimale par soustraction du profil de composante commun optimal de l'au moins une trace d'intensité mise à l'échelle de manière optimale.

5. Système selon la revendication 5, dans lequel le processeur (1130) est en outre configuré pour :

reconstruire un composé de trace d'intensité d'intérêt correspondant à la trace d'intensité mise à l'échelle de manière optimale par mise à l'échelle du profil de composante commun optimal selon l'inverse d'un facteur de mise à l'échelle utilisé pour mettre à l'échelle la trace d'intensité à la trace d'intensité mise à l'échelle de manière optimale.

**6.** Système selon la revendication 6, dans lequel le processeur (1130) est en outre configuré pour :
quantifier un ion produit en utilisant le composé reconstruit de trace d'intensité d'intérêt.

**7.** Procédé permettant de calculer un profil de composante commun à partir d'au moins deux mesures d'intensité issues d'une distribution d'intensité, ledit procédé comprenant :

la réception d'une pluralité de mesures d'intensité depuis un spectromètre de masse (1120) à l'aide d'un processeur (1130), la pluralité de mesures d'intensité étant produites par le spectromètre de masse (1120) par analyse d'au moins un composé issu d'un mélange ;
le calcul d'une pluralité de traces d'intensité pour une plage d'une dimension mesurée à partir de la pluralité de mesures d'intensité à l'aide du processeur (1130) ;
la sélection d'une valeur d'intensité pour la pluralité de traces d'intensité à l'aide du processeur (1130) ;
pour chaque point de mesure d'une pluralité de points de mesure sur la plage d'une dimension mesurée,
le mise à l'échelle de chaque trace d'intensité de la pluralité de traces d'intensité pour avoir la valeur d'intensité à chaque point de mesure,
le calcul d'un profil de composante commun pour chaque point de mesure qui est fonction d'au moins un paramètre de la pluralité de traces d'intensité mises à l'échelle sur la pluralité de points de mesure, et
le calcul d'un score pour le profil de composante commun qui est fonction d'au moins un paramètre du profil de composante commun et d'au moins un paramètre de la pluralité de traces d'intensité mises à l'échelle à l'aide du processeur (1130) ; et
la sélection d'un profil de composante commun optimal à partir de la pluralité de profils de composante communs calculés sur la base des scores de la pluralité de profils de composante communs calculés à l'aide du processeur (1130).
dans lequel :
pour chaque mesure, le calcul d'un profil de composante commun et le calcul d'un score pour le profil de composante commun par :

le calcul d'un profil de composante commun pour chaque point de mesure en tant que contour de l'intensité minimale de la pluralité de traces d'intensité mises à l'échelle sur la pluralité de points de mesure, et
le calcul d'un score pour le profil de composante commun qui est fonction d'une distance entre un maximum du profil de composante commun et chaque point de mesure, une aire du profil de composante commun et des aires de soustractions du profil de composante commun de la pluralité de traces d'intensité mises à l'échelle, et
la sélection d'un profil de composante commun optimal par :
la sélection d'un profil de composante commun optimal à partir de la pluralité de profils de composante communs calculés qui a un score comparé aux scores d'autres profils de composante communs qui minimise de manière optimale une distance entre un maximum du profil de composante commun et chaque point de mesure, maximise une aire du profil de composante commun et minimise des aires de soustractions du profil de composante commun de la pluralité de traces d'intensité mises à l'échelle.

**8.** Système selon la revendications 7, dans lequel la valeur d'intensité pour la pluralité de traces d'intensité comprend 1.

**9.** Système selon l'une quelconque des revendications 7 à 8, dans lequel un score pour le profil de composante commun est calculé selon la fonction suivante :

$$\text{score}(x) = \text{médian}(\text{Residue\_Area}(x,t)/\text{Explained\_Area}(x)$$

où :

$$Explained\_Area(x) = \frac{1}{\max(Common\_profile_x)} * \sum_{\substack{c-w \\ Common\_profile_x(i) \in C}}^{c+w} Common\_profile_x(i)$$

profil de composante commun = $Common\_profile_x$

$$Residue\_Area(x,t) = \sum_{c-w}^{c+w} Residue\_profile_x(i,t)$$

et soustraction du profil de composante commun d'une trace d'intensité mise à l'échelle = $Residue\_profile_x$.

10. Procédé selon l'une quelconque des revendications 7 à 9, comprenant en outre :
la mise à l'échelle d'une trace d'intensité de la pluralité de traces d'intensités pour avoir la valeur d'intensité au point de mesure utilisé pour calculer le profil de composante commun optimal à l'aide du processeur (1130) et ainsi produire une trace d'intensité mise à l'échelle de manière optimale ; et/ou :

la détection d'au moins un pic d'interférence dans la trace d'intensité mise à l'échelle de manière optimale par comparaison du profil de composante commun optimal et de l'au moins une trace d'intensité mise à l'échelle de manière optimale à l'aide du processeur (1130) ; et/ou
dans lequel le profil de composante commun optimal et l'au moins une trace d'intensité mise à l'échelle de manière optimale sont comparés par soustraction du profil de composante commun optimal de l'au moins une trace d'intensité mise à l'échelle de manière optimale.

11. Procédé de la revendication 10, comprenant en outre :

la reconstruction d'un composé de trace d'intensité d'intérêt correspondant à la trace d'intensité mise à l'échelle de manière optimale par mise à l'échelle du profil de composante commun optimal selon l'inverse d'un facteur de mise à l'échelle utilisé pour mettre à l'échelle la trace d'intensité à la trace d'intensité mise à l'échelle de manière optimale à l'aide du processeur (1130) ;
ledit procédé comprenant éventuellement en outre :
la quantification d'ion produit en utilisant le composé reconstruit de trace d'intensité d'intérêt à l'aide du processeur (1130).

12. Produit de programme informatique, comprenant un support de stockage non transitoire et tangible lisible par ordinateur dont le contenu comprend un programme avec des instructions qui sont exécutées sur un processeur (1130) de manière à réaliser un procédé destiné à calculer un profil de composante commun à partir d'au moins deux mesures d'intensité issues d'une distribution d'intensité, comprenant :

la fourniture d'un système (1130), le système comprenant au moins un module de logiciel distinct, et les modules de logiciel distincts comprenant un module de mesure (1310) et un module d'analyse (1320) ;
la réception d'une pluralité de mesures d'intensité depuis un spectromètre de masse (1120) à l'aide du module de mesure (1310), la pluralité de mesures d'intensité étant produites par le spectromètre de masse (1120) par analyse d'au moins un composé issu d'un mélange ;
le calcul d'une pluralité de traces d'intensité pour une plage d'une dimension mesurée à partir de la pluralité de mesures d'intensité à l'aide du module d'analyse (1320) ;
la sélection d'une valeur d'intensité pour la pluralité de traces d'intensité à l'aide du module d'analyse (1320) ;
pour chaque point de mesure d'une pluralité de points de mesure sur la plage d'une dimension mesurée,
le mise à l'échelle de chaque trace d'intensité de la pluralité de traces d'intensité pour avoir la valeur d'intensité à chaque point de mesure,
le calcul d'un profil de composante commun pour chaque point de mesure qui est fonction d'au moins un paramètre de la pluralité de traces d'intensité mises à l'échelle sur la pluralité de points de mesure, et
le calcul d'un score pour le profil de composante commun qui est fonction d'au moins un paramètre du profil de composante commun et d'au moins un paramètre de la pluralité de traces d'intensité mises à l'échelle à l'aide du module d'analyse (1320) ; et
la sélection d'un profil de composante commun optimal à partir de la pluralité de profils de composante communs calculés sur la base des scores de la pluralité de profils de composante communs calculés à l'aide du module d'analyse (1320),
dans lequel :

pour chaque mesure, le calcul d'un profil de composante commun et le calcul d'un score pour le profil de composante commun par
le calcul d'un profil de composante commun pour chaque point de mesure en tant que contour de l'intensité minimale de la pluralité de traces d'intensité mises à l'échelle sur la pluralité de points de mesure, et
le calcul d'un score pour le profil de composante commun qui est fonction d'une distance entre un maximum du profil de composante commun et chaque point de mesure, une aire du profil de composante commun et des aires de soustractions du profil de composante commun de la pluralité de traces d'intensité mises à l'échelle, et
la sélection d'un profil de composante commun optimal par :
la sélection d'un profil de composante commun optimal à partir de la pluralité de profils de composante communs calculés qui a un score comparé aux scores d'autres profils de composante communs qui minimise de manière optimale une distance entre un maximum du profil de composante commun et chaque point de mesure, maximise une aire du profil de composante commun et minimise des aires de soustractions du profil de composante commun de la pluralité de traces d'intensité mises à l'échelle.

FIG. 1

FIG. 2

FIG. 3

FIG. 4

FIG. 5

FIG. 6

FIG. 7

FIG. 8

FIG. 9

FIG. 10

FIG. 11

START

RECEIVE A PLURALITY OF INTENSITY MEASUREMENTS FROM A MASS SPECTROMETER — 1210

CALCULATE A PLURALITY OF INTENSITY TRACES FOR A RANGE OF A MEASURED DIMENSION KNOWN TO INCLUDE AN INTENSITY OF A KNOWN COMPOUND — 1220

SELECT AN INTENSITY VALUE FOR THE PLURALITY OF INTENSITY TRACES — 1230

FOR EACH MEASUREMENT POINT OF A PLURALITY OF MEASUREMENT POINTS ACROSS THE RANGE

SCALE EACH XIC OF THE PLURALITY OF INTENSITY TRACES TO HAVE THE INTENSITY VALUE AT EACH MEASUREMENT POINT — 1240

CALCULATE A COMMON COMPONENT PROFILE FOR THE EACH MEASUREMENT POINT THAT IS A FUNCTION OF ONE OR MORE PARAMETERS OF THE PLURALITY OF SCALED INTENSITY TRACES ACROSS THE PLURALITY OF MEASUREMENT POINTS — 1250

CALCULATE A SCORE FOR THE COMMON COMPONENT PROFILE THAT IS A FUNCTION OF ONE OR MORE PARAMETERS OF THE COMMON COMPONENT PROFILE AND ONE OR MORE PARAMETERS OF THE PLURALITY OF SCALED INTENSITY TRACES — 1260

SELECT AN OPTIMUM COMMON COMPONENT PROFILE FROM THE PLURALITY OF CALCULATED COMMON COMPONENT PROFILES BASED ON THE SCORES OF THE PLURALITY OF CALCULATED COMMON COMPONENT PROFILES — 1270

END

1200

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8165373 B

- US 61985335